# EUROPEAN PATENT SPECIFICATION

(11) **EP 0 779 299 B1**
(45) Date of publication and mention of the grant of the patent: **04.07.2001**
(21) Application number: 95308998.4
(22) Date of filing: 11.12.1995
(51) Int. Cl.: C08F 2/06

(54) **A polymerization process for obtaining polymers of low molecular weight**
Polymerisationsverfahren zur Herstellung von Polymeren mit niedrigem molekularem Gewicht
Procédé de polymérisation pour la préparation de polymères de bas poids moléculaire

(43) Date of publication of application: 18.06.1997
(73) Proprietor: Council of Scientific & Industrial Research, New Delhi 110001 (IN)
(72) Inventor: Vijayaraghavan, Ranganathan, Madras 600 020 (IN); Pandurangarao, Sripada, Madras 600 020 (IN); Surianarayanan, Mahadevan, Madras 600 020 (IN); Vijaraghavan, Kondapuam, Madras 600 020 (IN)
(74) Representative: Marshall, Monica Anne

(56) References cited:
- FR-A- 1 561 315
- JOURNAL OF POLYMER SCIENCE, POLYMER CHEMISTRY EDITION, vol. 20, no. 11, 1 November 1982, NEW YORK US, pages 3181-3187, XP002003856 S.HUSSAIN: "POLYMERIZATION OF METHYL METHACRYLATE BY A CHARGE TRANSFER MECHANISM WITH UREA AND IRON (III) COMPLEX"

## Description

The present invention relates to a polymerization process for the preparation of polymers of low molecular weight. The polymer prepared by the process of the present invention may have the molecular weight of the order of 10⁴. This process particularly uses charge transfer polymerization mechanism employing free-radical quenchers as accelerators.

Low molecular weight polymers with narrow polydispersity index (1 < 1.7) find applications as additives in petroleum industry for pour point depression, viscosity improvement, and enhancement of antioxidant properties. These are commonly prepared by condensation, solution or charge transfer polymerizations.

Condensation polymerization follows a step growth mechanism which involves the same basic reaction either between two monomeric units, between two end groups of different polymer chains, or between a monomeric group and end group of a polymer chain. However, the utility of this type of process is limited to monomers containing specific functional groups such as carboxylic and phenolic groups.

In solution polymerization a solvent is used to dissolve the monomers, polymer and the initiators, and the solvent directly interacts with the growing chain to enable formation of low molecular weight polymers. The main disadvantage of this process is that it should be conducted at relatively high temperatures (>70°C) to be able to initiate the reaction. In charge transfer (CT) polymerization also a solvent is used to dissolve the monomers, polymer and the initiators. However, unlike in the case of solution polymerization, the initiation mechanism in CT polymerization takes place even at ambient temperature (≤ 25°C) through electron donor-acceptor interactions. Because of this distinct advantage CT polymerization route was chosen in the present case.

There has been an increasing interest in the CT polymerization process, especially for the preparation of homo and co-polymers of vinyl and acrylic monomers. For example, Hussian et al [Eur. polym. J. vol. 18, pp 795-798, 1982] studied charge transfer polymerization of methylmethacrylate using melamine and carbon tetrachloride as electron donor - acceptor pair. Kiyoshi et al [Jr. of Polym. Sci., Part A-1, vol. 10, 2601-2608, 1972] and Baruah et al [Eur. Polym. J. vol. 16, pp 11-14, 1980] have prepared the same polymer using copper amine complex resin and isopropylamine as electron donors. Matsuda et al [Jr. Polym. Sci. Part A-1, vol. 18, pp 387-397, 1970] studied polymerization of methylmethacrylate initiated by a charge transfer complex of poly-2-vinylpyridine(electron donor) and liquid SO₂ (acceptor) in the presence of carbon tetrachloride. However, in all the above mentioned studies, the polymer yields are typically about (5-12 %) and molecular weights are of the order of 10⁻⁵. Several attempts have been made by different researchers to improve the yields by employing catalysts/accelerators. For example Husain et al [Eur. Polym. Jr. vol. 18, pp 795-798, 1982 & Jr. of Polym. Sci, Polym. Chem. Ed. Vol. 20, 3181-3187, 1982] suggested Fe³⁺ (Lewis acid), and urea, Narita et al [Makromolek. Chem., 179, pp 1673, 1978] suggested cuprous chloride, Dass et al [Jr. of Polym. Sci, Polym. lett Ed., Vol. 20, 297-303, 1982 & Jr. of Polym. Sci, Polym. Chem. Ed., Vol. 23, 2561-2565, 1985] suggested ferric cyanide ions and hexakisdimethylsulphoxideiron (III) perchlorate, Mahat et al [Jr. of Polym. Material, Vol. 8, 133-138, 1991] suggested triphenyl phosphine/Fe³⁺, Kurmamoto et al [Jr. of Polym. Sci, Part A, Polym. Chem. Vol. 33, 967-971, 1995] suggested ferrocene as catalysts. Even when these catalysts are employed the polymer yields do not exceed 30 % in two hours reaction period.

The process of the present invention is based on the finding that if the polymerization is effected employing a free radical quencher, not only the resulting polymer has a low molecular weight but the yield is also improved.

The present invention aims to provide a charge transfer polymerization process in which an enhanced polymer yield of about 50 % may be obtained.

The present invention further aims to provide a process in which a polymer of low polydispersity index, in the range of 1.3-1.7, may be obtained.

The present invention yet further aims to provide an improved process which may be used for the preparation of low molecular weight polymers (of the order of 10⁴).

The present invention also aims to provide an improved process whereby polymers having low molecular weights with increased yields may be produced.

The present process is based on the finding that if the polymerization is carried out using a free radical quencher, not only the resulting polymer may have low molecular weights but the yield may also be increased. When the quencher is used in the reaction it is thought to absorb the free radicals that are generated on dissociation of the charge transfer complex, formed by the interaction of electron donor - acceptor molecules, which results in the increase in the concentration of cations. The diminished activity of free radicals, which determine the chain growth is considered responsible for the lowering of molecular weight of the polymer formed while the increased activity of cations contribute to the higher yields.

According to the invention there is provided a process for the preparation of a polymer which process comprises carrying out, in solution, polymerization of the desired monomer or monomers in the presence of a complex of an electron donor and an electron acceptor which complex dissociates during the process to release a free radical and a cation and of a free radical quencher.

In particular the present invention provides a process for the preparation of a polymer, which may have low molecular weight of the order of 10⁴, which process comprises:
(i) reacting an electron donor and an electron acceptor in a solvent medium at a temperature below the boiling point of the mixture under inert atmosphere, to form a complex which dissociates during the process to release a free radical and a cation radical;
(ii) preparation a solution of the desired monomer or monomers and the free radical quencher in the same solvent or a solvent soluble in that used in step (i), at a temperature below the boiling point of the mixture and under an inert atmosphere;
(iii) mixing the mixtures of steps (i) and (ii), e.g. by adding the mixture obtained in step (ii) to the mixture obtained in step (i), to form the polymer;
(iv) precipitating the polymer in a solvent formed in step (iii), which may be in conventional manner;
(v) separating the precipitated polymer, which may be in conventional manner; and suitably
(vi) drying the polymer obtained, e.g. in conventional manner.

Preferably, the present process can be carried out by reacting isopropylamine or triethylamine or decylamine or n-butylamine (electron donor) and carbon tetrachloride (electron acceptor) in dimethyl sulphoxide (solvent medium) at 60°C (temperature below the boiling point of the mixture) and in N (inert) atmosphere, to form a complex which dissociates to release a free radical and a cation radical; a solution of the methylmethacrylate or styrenemethylmethacrylate or styrene-ethylmethacrylate or styrenebutyl methacrylate (desired monomer or monomers) and hydroquinone or galvinoxyl or 1,4-benzoquinone or diphenyl picrylhydrazyl or 4-methoxy phenol (the free radical quencher) in the same solvent, temperature and inert atmosphere used in step (i); adding the reaction mixture obtained in step (ii) to the mixture obtained in step (i) to form the polymer; precipitating the polymer obtained in step (iii) by using methanol or ethylalcohol (non solvent); separating the precipitated polymer by conventional methods; and drying the polymer by any one of the known methods.

The solvent in steps (i) and (ii) should be able to dissolve the monomers as well as the polymer. As examples of the solvent dimethyl sulphoxide, dimethyl formamide, tetrahydrofuran may be mentioned. Similar solvents may also be employed.

An electron donor such as n-butylamine, melamine, urea, diethylamine, triethylamine, trimethylamine, maleonitrile, ethanolamine, dinitro phenylhydrazine (DNPH), polyvinyl amine, isopropyl amine may be used.

An electron acceptor such as carbon tetrabromide, carbon tetrachloride, chloroform, methylene chloride, chloro benzene may be used.

The quencher used should be capable of absorbing the free radicals and enhance the concentration of cations. Quenchers such as 1,4-benzoquinone, galvinoxyl, diphenyl picrylhydrazyl, hydroquinone, 4-methoxy phenol may be used.

The monomer used may be selected from vinyl or acrylic monomers such as methylmethacrylate, styrene, ethylmethacrylate and butylmethacrylate. The precipitate of the polymer formed may be separated by vacuum filtration.

The invention is described in detail in the Examples given below which are provided merely to illustrate the invention.

### EXAMPLE 1

In this process copolymerization of styrene and ethylmethacrylate (EMA) was conducted at 60°C in dimethyl sulphoxide (DMSO) solvent using isopropyl amine and carbon tetrachloride as the initiator pair. 1,4 benzoquinone was employed as the free radical quencher.

The monomers were freed from inhibitors by washing with 5 % sodium hydroxide solution followed by washing with excess water and finally distilled under vacuum. The initiators used were purified by distillation at atmospheric pressure. The solvent was purified by vacuum distillation. Analytical grade quencher was used without further purification.

Polymerization was carried out in a two limbed H-shaped vessel. The first limb contained the predetermined amounts of quencher (2 x 10⁻³ moles/litre), and monomers (styrene = 2.5 moles/litre; EMA = 1.5 moles/litre) in the solvent while the second limb contained the initiators (isopropylamine = 2.85 moles/litre; and carbon tetrachloride = 1.87 moles/litre) in the solvent. The vessel contents were placed under nitrogen atmosphere. The contents of the second limb were then transferred into those of the first, limb and the vessel was thermostatted at 60°C. The copolymerization was allowed to proceed for 2 hours.

Then the copolymer was precipitated in an excess methanol, vacuum filtered, and vacuum dried at 30°C.

The copolymer was weighed, and percentage yield calculated. The polymer was characterised by gel permeation chromatography (GPC) for molecular weight distribution. The results are summarised in Table 1.

### EXAMPLE 2

In this process homopolymerization of methylmethacrylate (MMA) was conducted at 60°C in dimethyl sulphoxide (DMSO) solvent using triethylamine and carbon tetrachloride as the initiator pair. Galvinoxyl was employed as the free radical quencher.

The monomer (methylmethacrylate) was freed from inhibitors by washing with 5 % sodium hydroxide solution followed by washing with excess of water and finally distilled under vacuum. The initiators used were purified by distillation at atmospheric pressure. The solvent was purified by vacuum distillation. Analytical grade quencher was used without further purification.

Polymerization was carried out in a two limbed H-shaped vessel. The first limb contained the predetermined amounts of quencher (2.5 x 10⁻⁴ moles/litre), and monomer (methylmethacrylate = 3 moles/litre) in the solvent while the second limb contained the initiators (triethylamine = 0.5 moles/litre; and carbon tetrachloride = 1.82 moles/litre) in the solvent. The vessel contents were placed under nitrogen atmosphere. The contents of the second limb were then transferred into those of the first limb and the vessel was thermostatted at 60°C. The homopolymerization was allowed to proceed for 2 hours.

Then the homopolymer was precipitated in excess methanol, vacuum filtered, and vacuum dried at 30°C.

The homopolymer was weighed, and percentage yield calculated. The polymer was characterized by gel permeation chromatography for molecular weight distribution. The results are summarised in Table 1.

### EXAMPLE 3

In this process copolymerization of styrene was conducted at 60°C in dimethyl sulphoxide (DMS) solvent using decylamine and carbon tetrachloride as the initiator pair. Diphenylpicrylhydrazyl (DPPH) was employed as the free radical quencher.

The monomers (styrene-butylmethacrylate) were freed from inhibitors by washing with 5 % sodium hydroxide solution followed by washing with excess water and finally distilled under vacuum. The initiators used were purified by distillation at atmospheric pressure. The solvent was purified by vacuum distillation. Analytical grade quencher was used without further purification. Polymerization was carried out in a two limbed H-shaped vessel. The first limb contained the predetermined amounts of quencher (1.2 x 10⁻⁴ moles/litre), monomers (styrene = 2 moles/litre and butylmethacrylate = 2 moles/litre) in the solvent while the second limb contained the initiators (decylamine = 1.82 moles/litre; and carbon tetrachloride = 1.87 moles/litre) in the solvent. The vessel contents were placed under nitrogen atmosphere. The contents of the second limb were then transferred into those of the first limb and the vessel was thermostatted at 60°C. The copolymerization was allowed to proceed for 2 hours.

Then the copolymer was precipitated in an excess methanol, vacuum filtered, and vacuum dried at 30°C.

The copolymer was weighed, and percentage yield calculated. The polymer was characterised by gel permeation chromatography for molecular weight distribution. The results are summarised in Table 1.

### EXAMPLE 4

In this process copolymerization of styrene and methylmethacrylate was conducted at 60°C in dimethyl sulphoxide (DMSO) solvent using n-butylamine and carbon tetrachloride as the initiator pair. Hydroquinone was employed as the free radical quencher.

The monomers (styrene and methylmethacrylate) were freed from inhibitors by washing with 5 % sodium hydroxide solution followed by washing with excess water and finally distilled under vacuum. The initiators used were purified by distillation at atmospheric pressure. The solvent was purified by vacuum distillation. Analytical grade quencher was used without further purification.

Polymerization was carried out in a two limbed H-shaped vessel. The first limb contained the predetermined amounts of quencher (2.75 x 10⁻³ moles/litre), and monomers (styrene = 0.5 mole/litre and methylmethacrylate = 3.5 moles/litre) in the solvent while the second limb contained the initiators (n-butylamine = 0.75 moles/litre; and carbon tetrachloride = 1.87 moles/litre) in the solvent. The vessel contents were placed under nitrogen atmosphere. The contents of the second limb were then transferred into those of the first limb and the vessel was thermostatted at 60°C. The homopolymerization was allowed to proceed for 2 hours.

Then the copolymer was precipitated in excess methanol, vacuum filtered, and vacuum dried at 30°C.

The copolymer was weighed, and percentage yield calculated. The polymer was characterised by gel permeation chromatography for molecular weight distribution. The results are summarised in Table 1.

### EXAMPLE 5

In this process homopolymerization of methylmethacrylate was conducted at 60°C in dimethyl sulphoxide (DMSO) solvent using n-butylamine and carbon tetrachloride as the initiator pair. 4-methoxyphenol was employed as the free radical quencher.

The monomer (methylmethacrylate) was freed from inhibitors by washing with 5 % sodium hydroxide solution followed by washing with excess water and finally distilled under vacuum. The initiators used were purified by distillation at atmospheric pressure. The solvent was purified by vacuum distillation. Analytical grade quencher was used without further purification. Polymerization was carried out in a two limbed H-shaped vessel. The first limb contained the predetermined amounts of quencher (2 x 10⁻³ moles/litre), and monomer (methylmethacrylate = 2 moles/litre) in the solvent while the second limb contained the initiators (n-butylamine = 1.2 moles/litre; and carbon tetrachloride = 1.87 moles/litre) in the solvent. The vessel contents were placed under nitrogen atmosphere. The contents of the second limb were then transferred into those of the first limb and the vessel was thermostatted at 60°C. The homopolymerization was allowed to proceed for 2 hours.

Then the homopolymer was precipitated in excess methanol, vacuum filtered, and vacuum dried at 30°C.

The homopolymer was weighed, and percentage yield calculated. The polymer was characterised by gel permeation chromatography. The results are summarised in Table 1.

**TABLE 1**

| **RESULTS OF CHARGE TRANSFER INITIATED POLYMERIZATION SYSTEM INVOLVING FREE RADICAL QUENCHERS** | | | | |
|---|---|---|---|---|
| Example | % Yield | Mn x 10⁴ | M_{w} x 10⁴ | M_{w}/Mₙ |
| 1 | 38.5 | 1.6 | 2.7 | 1.67 |
| 2 | 44.1 | 0.6 | 0.7 | 1.17 |
| 3 | 46.3 | 1.0 | 1.4 | 1.43 |
| 4 | 62.35 | 0.8 | 1.0 | 1.23 |
| 5 | 32.40 | 1.0 | 1.4 | 1.32 |

The results of Table 1 clearly show the use of free radical quenchers in the process developed by the invention results in higher yields (30-60 %), with a polydispersity index of 1.2 - 1.7 and molecular weight in the order of 104.

The results shown in Table 2 below correspond to copolymerization of sty-EMA, homopolymerization of MMA and sty. These experiments were carried out at 30°C by adopting the same procedures outlined in the five examples of Table 1. The objective of presenting these results is to show that even at temperatures < 30°C polymerization can be initiated by CT mechanism and enhancement of yields achieved by using radical quenchers.

**TABLE 2**

| S. No. | % Yield | Mₙ x 10⁴ | M_{w} x 10⁴ | M_{w}/Mₙ |
|---|---|---|---|---|
| 1 | 15.3 | 2.1 | 3.2 | 1.52 |
| 2 | 12.5 | 2.6 | 3.8 | 1.65 |
| 3 | 10.7 | 2.8 | 3.9 | 1.82 |

## Claims

1. A process for the preparation of a polymer which process comprises carrying out, in solution, polymerization of the desired monomer or monomers in the presence of a complex of an electron donor and an electron acceptor which complex dissociates during the process to release a free radical and a cation and of a free radical quencher.

2. A process according to claim 1 which process comprises:
(i) reacting an electron donor and an electron acceptor in a solvent medium at a temperature below the boiling point of the mixture under inert atmosphere, to form a complex which dissociates during the process to release a free radical and a cation;
(ii) preparing a solution of the desired monomer or monomers and the free radical quencher in the same solvent or a solvent soluble in that used in step (i) at a temperature below the boiling point of the mixture and under an inert atmosphere;
(iii) mixing the mixtures obtained in step (i) and (ii) to form the polymer.

3. A process according to claim 1 for the preparation of a polymer having a molecular weight of the order of 10⁴ and a polydispersity index in the range of 1.2 - 1.7, which process comprises:
(i) reacting an electron donor and an electron acceptor in a solvent medium at a temperature below the boiling point of the mixture under inert atmosphere, to form a complex which dissociates during the process to release a free radical and a cation;
(ii) preparing a solution of the desired monomer of monomers and the free radical quencher in the same solvent used in step (i), under the same temperature and inert atmosphere used in step (i);
(iii) adding the reaction mixture obtained in step (ii) to the mixture obtained in step (i) to form the polymer;
(iv) precipitating the polymer in a solvent formed in step (iii) in conventional manner;
(v) separating the precipitated polymer in convention manner; and
(vi) drying the polymer in conventional manner.

4. A process according to any of the preceding claims, wherein the solvent used in steps (i) and (ii) is selected from dimethyl sulphoxide, dimethyl formamide and tetrahydrofuran.

5. A process according to any of the preceding claims wherein the electron donor used is n-butylamine, melamine, urea, diethylamine, triethylamine, trimethylamine, maleonitrile, ethanolamine, dinitrophenylhydrazine (DNPH), polyvinylamine, or isopropylamine.

6. A process according to any of the preceding claims, wherein the electron acceptor used is carbon tetrachloride, carbon tetrabromide, chloroform, methylene chloride, or chlorobenzene.

7. A process according to any of the preceding claims, wherein the free radical quencher used is 1,4-benzoquinone, galvinoxyl, diphenypicrylhydrazyl, hydroquinone or 4-methoxy phenol.

8. A process according to any of the preceding claims wherein the monomer(s) used is (are) selected from vinyl or acrylic monomers.

9. A process according to claim 8, wherein the monomer(s) is (are) selected from methyl methacrylate, styrene, butyl methacrylate and ethyl methacrylate.

## Patentansprüche

1. Verfahren zur Herstellung eines Polymers, wobei das Verfahren die Durchführung, in Lösung, der Polymerisation des gewünschten Monomers oder der gewünschten Monomere in der Gegenwart eines Komplexes eines Elektronendonors und eines Elektronenakzeptors umfaßt, wobei der Komplex während des Verfahrens unter Freisetzung eines freien Radikals und eines Kations dissoziiert die Polymerisation und in der Gegenwart eines freien Radikalquenchers erfolgt.

2. Verfahren gemäß Anspruch 1, umfassend die Verfahrensschritte:
(i) Umsetzen eines Elektronendonors und eines Elektronenakzeptors in einem Lösungsmittelmedium bei einer Temperatur unterhalb des Siedepunkts der Mischung unter einer inerten Atmosphäre zur Bildung eines Komplexes, der während des Verfahrens unter Freisetzung eines freien Radikals und Kations dissoziiert;
(ii) Herstellen einer Lösung des gewünschten Monomers oder der gewünschten Monomere und des Quenchers für freie Radikale in demselben Lösungsmittel oder einem in dem in Schritt (i) verwendeten Lösungsmittel löslichen Lösungsmittel bei einer Temperatur unterhalb des Siedepunkts der Mischung und unter einer inerten Atmosphäre;
(iii) Mischen der in Schritt (i) und (ii) erhaltenen Mischung zur Bildung des Polymers.

3. Verfahren gemäß Anspruch 1 zur Herstellung eines Polymers mit einem Molekulargewicht der Größenordnung von 10⁴ und einem Polydispersitätsindex im Bereich von 1,2 bis 1,7, wobei das Verfahren folgende Schritte umfaßt:
(i) Umsetzen eines Elektronendonors und eines Elektronenakzeptors in einem Lösungsmittelmedium bei einer Temperatur unterhalb des Siedepunkts der Mischung unter inerter Atmosphäre zur Bildung eines Komplexes, der während des Verfahrens unter Freisetzung eines freien Radikals und eines Kations dissoziiert;
(ii) Herstellen einer Lösung des gewünschten Monomers oder der gewünschten Monomere und des Quenchers für freie Radikal in demselben Lösungsmittel, das in Schritt (i) verwendet wurde, unter derselben Temperatur und Atmosphäre, die in Schritt (i) verwendet wurden;
(iii) Zugeben der in Schritt (ii) erhaltenen Reaktionsmischung zu der in Schritt (i) erhaltenen Mischung zur Bildung des Polymers;
(iv) Präzipitieren des Polymers in einem in Schritt (iii) gebildeten Lösungsmittel auf herkömmliche Weise;
(v) Trennen des präzipitierten Polymers auf herkömmliche Weise; und
(vi) Trocknen des Polymers auf herkömmliche Weise.

4. Verfahren gemäß einem der vorhergehenden Ansprüche, bei dem das in den Schritten (i) und (ii) verwendete Lösungsmittel ausgewählt ist aus Dimethylsulfoxid, Dimethylformamid und Tetrahydrofuran.

5. Verfahren gemäß einem der vorhergehenden Ansprüche, wobei der verwendete Elektronendonor n-Butylamin, Melamin, Harnstoff, Diethylamin, Triethylamin, Trimethylamin, Maleonitril, Ethanolamin, Dinitrophenylhydrazin (DNPH), Polyvinylamin oder Isopropylamin ist.

6. Verfahren gemäß einem der vorhergehenden Ansprüche, wobei der verwendete Elektronenakzeptor Kohlenstofftetrachlorid, Kohlenstofftetrabromid, Chloroform, Methylenchlorid oder Chlorbenzol ist.

7. Verfahren gemäß einem der vorhergehenden Ansprüche, wobei der verwendete Quencher für freie Radikale 1,4-Benzochinon, Galvinoxyl, Diphenylpicrylhydrazyl, Hydrochinon oder 4-Methoxyphenol ist.

8. Verfahren gemäß einem der vorhergehenden Ansprüche, wobei das/die verwendete(n) Monomer(e) aus Vinyl- oder Acrylmonomeren ausgewählt ist (sind).

9. Verfahren gemäß Anspruch 8, wobei das/die Monomer(e) aus Methylmethacrylat, Styrol, Butylmethacrylat und Ethylmethacrylat ausgewählt ist (sind).

## Revendications

1. Procédé pour la préparation d'un polymère, lequel procédé comprend la réalisation en solution d'une polymérisation du monomère ou des monomères souhaités en présence d'un complexe d'un donneur d'électrons et d'un accepteur d'électrons, lequel complexe se dissocie pendant le procédé pour libérer un radical libre et un cation et en présence d'un extincteur de radical libre.

2. Procédé selon la revendication 1, lequel procédé comprend :
(i) la réaction d'un donneur d'électrons et d'un accepteur d'électrons dans un milieu de solvant à une température inférieure au point d'ébullition du mélange sous une atmosphère inerte pour former un complexe qui se dissocie pendant le procédé pour libérer un radical libre et un cation ;
(ii) la préparation d'une solution du monomère ou des monomères souhaités et de l'extincteur de radical libre dans le même solvant ou dans un solvant soluble dans celui utilisé dans l'étape (i) à une température inférieure au point d'ébullition du mélange et sous une atmosphère inerte ;
(iii) le mélange des mélanges obtenus dans l'étape (i) et (ii) pour former le polymère.

3. Procédé selon la revendication 1 pour la préparation d'un polymère ayant un poids moléculaire de l'ordre de 10⁴ et un indice de polydispersité dans l'intervalle de 1,2-1,7, lequel procédé comprend :
(i) la réaction d'un donneur d'électrons et d'un accepteur d'électrons dans un milieu de solvant à une température inférieure au point d'ébullition du mélange sous une atmosphère inerte pour former un complexe qui se dissocie pendant le procédé pour libérer un radical libre et un cation ;
(ii) la préparation d'une solution du monomère ou des monomères souhaités et de l'extincteur de radical libre dans le même solvant que celui utilisé dans l'étape (i), aux mêmes température et atmosphère inerte que celles utilisées dans l'étape (i) ;
(iii) l'addition du mélange réactionnel obtenu dans l'étape (ii) au mélange obtenu dans l'étape (i) pour former le polymère ;
(iv) la précipitation du polymère dans un solvant formé dans l'étape (iii) de manière classique ;
(v) la séparation du polymère précipité de manière classique ; et
(vi) le séchage du polymère de manière classique.

4. Procédé selon l'une quelconque des revendications précédentes, dans lequel le solvant utilisé dans les étapes (i) et (ii) est choisi parmi le diméthylsulfoxyde, le diméthylformamide et le tétrahydrofuranne.

5. Procédé selon l'une quelconque des revendications précédentes, dans lequel le donneur d'électrons utilisé est la n-butylamine, la mélamine, l'urée, la diéthylamine, la triéthylamine, la triméthylamine, le maléonitrile, l'éthanolamine, la dinitrophénylhydrazine (DNPH), la polyvinylamine ou l'isopropylamine.

6. Procédé selon l'une quelconque des revendications précédentes, dans lequel l'accepteur d'électrons utilisé est le tétrachlorure de carbone, le tétrabromure de carbone, le chloroforme, le chlorure de méthylène ou le chlorobenzène.

7. Procédé selon l'une quelconque des revendications précédentes, dans lequel l'extincteur de radical libre utilisé est la 1,4-benzoquinone, le galvinoxyle, le diphénylpicrylhydrazyle, l'hydroquinone ou le 4-méthoxyphénol.

8. Procédé selon l'une quelconque des revendications précédentes, dans lequel le(les) monomère(s) utilisé(s) est(sont) choisi(s) parmi des monomères vinyliques ou acryliques.

9. Procédé selon la revendication 8, dans lequel le(les) monomère(s) est(sont) choisi(s) parmi le méthacrylate de méthyle, le styrène, le méthacrylate de butyle et le méthacrylate d'éthyle.
